# EUROPEAN PATENT APPLICATION

(11) **EP 1 760 620 A2**
(43) Date of publication of application: **07.03.2007**
(21) Application number: 06118960.1
(22) Date of filing: 15.08.2006
(51) Int. Cl.: G06F 21/00

(54) **Methods and Systems for Detection of Forged Computer Files**

(30) Priority: 16.08.2005 US 708824 P; 11.08.2006 US 503099
(71) Applicant: EEye Digital Security, Aliso Viejo CA 92656 (US)
(72) Inventor: COPLEY, Drew, Aliso Viejo, CA 92656 (US)
(74) Representative: Freeman, Jacqueline Carol

(57) **Abstract**

In accordance with one or more embodiments of the present invention, a method of determining whether a suspect file is malicious includes the operations parsing the suspect file to determine if the suspect file purports to be a system file, performing at least one of a heuristic and signature analysis on the purported system file to determine if one or more attributes of the purported system file are consistent with the known attributes of a system file, and handling the purported system as a malicious file if the purported system file has at least one attribute that is determined not to be consistent with the attributes of a system file. The suspect file is a purported system file when the suspect file includes at least one characteristic attribute of a system file.

## Description

### CROSS-REFERENCE TO RELATED APPLICATIONS

This application claims priority from a Provisional Patent Application No. 60/708,824 filed in the United States Patent and Trademark Office, on August 16, 2005.

### BACKGROUND

### 1. Field of the Invention

The present invention relates to computer security, and more particularly relates to a method and system for detection of forged computer files.

### 2. Description of the Related Art

In general, traditional AV (anti-virus or anti-viral) computer security systems may operate using a "black list". That is, the system may access a list of characteristics associated with known malicious files, and then use this list of characteristics for comparison with suspect files coming under examination. These characteristics are generally blind in nature, and usually consist of some form of exact or nearly exact byte code combinations. A problem with these kinds of systems is that the more dynamic the system is, the more false positives, or falsely labeled malicious files, tend to be detected. Further, the scope of protection offered by a black list system is typically less than the scope of protection offered by a "white list" system. A static "black list" system may be considered a signature based Anti-Virus system, whereas a dynamic "black list" system may be considered a heuristic Anti-Viral system.

Alternatively, "white list" systems typically are not considered anti-viral systems even though they usually boast many of the advantages associated with an anti-viral system. White list systems traditionally operate in a very strict manner, unlike black list systems, since a white list system typically keeps a byte code list based on signature hashing or cryptographic technology and may apply this list to any new file or attempted file changes. In this manner, any legitimate file put onto the computer system must first be validated by a central controller, which will ultimately require manual intervention, as opposed to a more automated process. Historically, there has been very little work done to make a more heuristic type of white list computer security system.

A problem with having a static white list system - as opposed to dynamic - is that it introduces a bottleneck on the manual inspection of incoming files. In a sense, such a system is prone to a very high degree of false positives because any file which comes up for examination is deemed suspect and must ultimately be manually verified, either by the user of the product or as a service provided by the product vendor. While the vast majority of suspect files will be deemed non-malicious, there is never a guarantee that manually accepted files are non-malicious. Therefore, there remains a need in the art for methods and systems to provide an intelligent way to select and analyze potentially malicious files while reducing false positive detections and improving security system performance.

### SUMMARY

A heuristic analysis system, according to at least one embodiment of the present invention, is designed to detect forged computer system files in order to identify these files as potentially malicious. While many traditional heuristic systems for malicious file detection analyze a suspect file for malicious behavior, one or more embodiments of the present invention provide methods and systems that may engage in a heuristic or investigative analysis on a file in an attempt to see if the file purports to be a legitimate, system file. The methods and systems may also engage in a heuristic or investigative analysis on that purported system file to see if it is actually a system file. If it is found that the file is purporting to be a system file, but is not actually a legitimate system file, then that file is classified and handled as a malicious file. This system supports dynamic changes of system files, but precludes or attempts to preclude malicious replacement or duplications or the addition of extraneous files which appear to be system files, but which are not actual system files. In the terminology of anti-virus technologies, "heuristic" typically means one thing while "signature" another. In practical use, these terms overlap and in this disclosure both heuristic and signature analysis may be used individually or together. The systems and methods herein described are not designed to replace a proper digital signature authentication, Anti-Viral (AV), or heuristics, but rather to supplement such systems and methods.

While the systems and methods described herein may be used in a stand-alone fashion, they are primarily designed as a supplemental security system to enhance existing security measures including cryptographic signature based integrity systems, signature based anti-virus, and other heuristic based anti-virus systems. Since these existing systems and others include weaknesses and inherent vulnerabilities, the systems and methods herein disclosed may fill-in or compensate for such inadequacies and provide a more robust security solution.

### BRIEF DESCRIPTION OF THE DRAWINGS

FIG. 1 shows an anti-forgery heuristic flow, in accordance with an embodiment of the present invention.
FIG. 2 shows another anti-forgery heuristic flow, in accordance with an embodiment of the present invention.
FIG. 3 shows an exemplary computer system for implementing the anti-forgery heuristic flows, in accordance with an embodiment of the present invention.
   Embodiments of the present invention and their advantages are best understood by referring to the detailed description that follows. It should be appreciated that like reference numerals are used to identify like elements illustrated in one or more of the figures.

### DETAILED DESCRIPTION

The term "malware" may be defined as being any type of potentially malicious computer file or suspect file, whether it is an executable file type, a binary file, or another file type that is used by an executable type, such as a rules file, a HyperText Markup Language (HTML) file, or a extensible Markup Language (XML) file, a multimedia file such as a music or movie file, or an image file, etc. Therefore, any manner of file or file type might be considered a "malware" file, where this definition encompasses every manner of malicious code including the ubiquitous computer virus, which by definition, is designed to have spreading code, but it also encompasses various malicious files which do not have spreading code, including trojan horse files (trojans), rootkits for intrusion masking of unauthorized access, and other types of spyware for clandestinely gathering information about a user or system. A piece of malware file might also include the aforementioned non-executable code, such as a HTML file or a music file, or any other file that might be executed by another application or computer process. The term forgery implies a deliberate attempt on the part of a user or a malicious program designed by a user, to obfuscate the nature of a computer file in order to gain access to or remain undisturbed within a computer file system or memory. Hence, an anti-forgery system may be one that identifies and handles forged computer files that are categorically assumed to be malicious, at least given the fact that their true nature or function was hidden.

A "system file" is herein defined as any file that has a legitimate purpose on the system. This file may be executable or not executable. It may or may not come from the Operating System vendor. A "system file", in this context, therefore, refers to any non-malicious file that has a system owner approved context for being on the system. In some cases, one owner of a system may define "malicious" in subjective terms that other owners do not use. This type of file is also herein defined as "system file", for the purposes of the explanation herein.

In contrast, an example of what a "system file" would not be may include content on the web (World Wide Web - WWW). For example, if a user receives a "phishing" attack where an email (electronic mail message) comes to the user purporting to be from a financial institution, or some other legitimate entity, the email would then not be posing information as a system file, but rather as a remote website. Alternatively, an HTML file purportedly from the OS vendor which is posing as an executable content update, however would likely be considered a "system file" because it is posed as a necessary or legitimate file for use by a system resource - even though the file itself merely includes HTML language code. As will be described more fully below, the terms posing, claiming, and/or purporting refer to one or more characteristic attributes or properties of a file, including a file name root and/or file name extension, which a user or system may examine in order to make a decision or form a conclusion about the file type, file content, or file function. For example, a file having an extension *.txt would be considered posing or purporting to be a non-executable text file. If the purported text file instead included executable code, such as a compiled binary sequence instead of merely text, such a purported text message would likely be considered suspicious. In one example, a file may have a file extension or other identifier that describes the file as a text file, or other non-executable file type, yet the purported text file may include executable code and/or be located in a directory within the file system where executable files are typically found. In this manner, an application program may be able to easily execute the executable file posing as a text file since the location of this possibly malicious file may be within a directory holding executable files normally activated by an application program.

In the context of non-executable content, a "system file" under this definition might be a file which is posed as a rules file or a script file from an accepted vendor. Hence, "system files" might also include third party applications, such as a Macromedia (R) or Adobe (R) files which are used by the system in viewing certain content. An MP3 (Moving Picture Experts Group (MPEG) audio layer 3) or other music file may not generally be considered a "system file" unless it was posing as one in a particular instance. It could be that a vulnerability in the MP3 format might make it something hackers could attempt to use as an attachment whereby the title of the MP3 file looks like a system file update of some kind. In such a case, the MP3 music file would be posing as a system file, and would effectively be a system file under these criteria. A purported system file may be examined based on the file content to determine the presence of executable code and to compare the function of any executable code to the expected and/or acceptable parameters based on the system file type, file originator [like MICROSOFT (R)], or the file scope including the range of functions that may be called and/or executed.

The file contents of a suspect file may be analyzed in many different ways in order to compare against the file contents of known good files. Two general steps for an exemplary process may include: first, a step of verifying the claim of the file as being a system file, and second, a step of verifying that these claims are true or false.

Files claiming to be legitimate system files may make this claim in many different ways: they may claim the operating system (OS) vendor wrote the file in the contents of version section of the PE executable; they may claim that the file is a system file by the name of the file being the same name as a known system file; they may claim the file is legitimate by the usage of a system file icon associated with system files; they may have functionality within the file which is reserved for system files but will not be exposed until runtime such as functionality to decompress and create a secondary file with system file attributes, or functionality to create a driver which utilizes system file attributes within the definition of that driver; or, for example, the file may have functionality in it reserved solely for system files.

Once it has been determined that there is a claim of authenticity, an examination of the veracity of that authentication is then made. This process may involve many different points of inspection, for instance: system files of a certain version or time period may have certain characteristics such as certain types of wording syntax within the versioning information; files which specifically claim to be certain system files must adhere to known behavioral characteristics of those files, for instance, a new version of the system file transfer protocol (FTP) application might be known not to have hard coded network addresses within them whereas a malicious forgery might have a hard coded network address within them, or such a file might be known to not have file deletion or creation capabilities within them; system files from a certain vendor might be known to be packed or encrypted in certain manner and deviations from these manners might prove the file a forgery; certain system files will have certain file icons and a suspect file found with different icons or inappropriate icons might prove that file as being a forgery; suspect files might be compiled with compiler options or foreign compilers not congruent with claimed system file compiler methodologies which might reveal it is a forgery; suspect files might contain language which is not congruent with system file language hard coded within the file, such as Chinese language in a claimed English version of the file, or other extraneous text known not to reside in such a system file; or, for instance, the suspect file might not have functionality or might have aberrant functionality which the authenticate system file or type of system file is known to have, for instance a file claims to be the system FTP application but does not have capabilities which the authentic FTP application is known to have.

Many Anti-Virus (AV) solutions are signature based, which means that they look for a particular signature within a file, compare that with the file size, and if this file is found to be a known piece of malware then this file is treated as a malicious file. A malicious file may be repaired (scrubbed), disabled, quarantined, or deleted. A major problem with signature based Anti-Virus systems is that they require a prior infection to have taken place and for this infection to have been discovered in the first place, or that in some other way this piece of malicious software is already know and detected.

Malware redesigners have been trivially surmounting such systems for years by performing easily done modifications of the original malicious file so that it appears to be a different file in order to escape detection. This has led to nearly endless variations on already well known malware. This problem is further highlighted by the fact that such minor changes are easily caught by malware researchers examining the file and performing human judgments on minute criteria of the file.

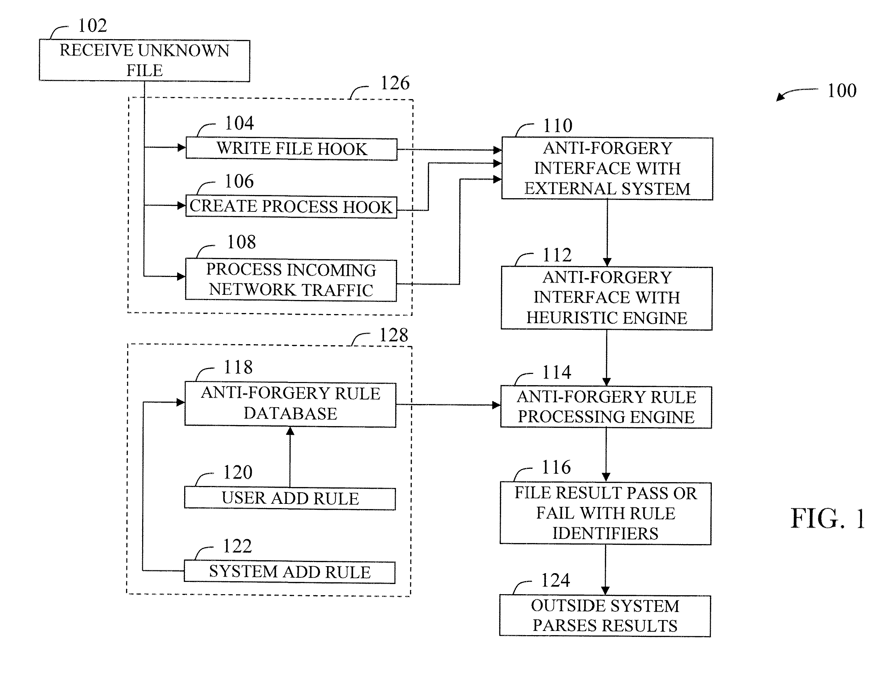

FIG. 1 shows an anti-forgery heuristic flow 100, in accordance with an embodiment of the present invention. The forgery detection or anti-forgery heuristic flow 100 may include one or more of the following operations, where flow 100 may begin with receiving an unknown, and possibly malicious, file in operation 102. Receiving the unknown file in operation 102 can include inserting a diskette carrying the suspect file, receiving a file sent over a computer network, or detecting the file resident in a computer file system on a file server or other computer system. Several concurrent, background, or offline processes or operations 126 may be utilized in a preparatory or pre-processing phase of receiving file after operation 102. The concurrent processes 126 might include but are not limited to writing a file hook 104, creating a process hook 106, and/or processing incoming network traffic 108.

For instance, an outside system may utilize a "writefile" API (application program interface) hook which is designed to scan any new file written to the system in operation 104, or the outside system may interface with the heuristic system by an "on-demand" scanner which processes all files found on a system already. Or, such a system may find the file through a network hook, such as in an IPS or IDS system. Or, such a system interface may hook into and send for processing any file which is attempting to be executed, though a createprocess hook 106, or such a system may utilize any or all combinations of such methods in order to bring into the heuristic system any unknown file for analysis.

Once the unknown file 102 is received and pre-processed, a pre-processed version of the unknown file is supplied to an anti-forgery interface with the outside system 110. This anti-forgery interface receives the pre-processed unknown file 102 from any of processes 104-108 and prepares the received unknown file 102 for processing by an anti-forgery heuristic engine 112. The anti-forgery heuristic engine 112 follows a series of operations that iteratively examine the pre-processed unknown file 102 in order to draw an inference as to whether the file is malicious and produces a heuristic engine output that is supplied to an anti-forgery rule processing engine 114. Engine 114 processes the output from engine 112 by applying a palate of anti-forgery rules to produce a determination of the file pass or fail result 116 with rule identifiers.

Engine 112 performs pre-processing on the file necessary for analysis. This pre-processing involves a pre-examination of the file to insure that it can be analyzed by the next engine, Engine 114. Such pre-processing includes but is not limited to making sure that the file is a valid file, examining the file for attempts to attack analysis engines, breaking down the file into parseable chunks, examining the various components of the file, examining the file for compression and encryption techniques, and so forth.

Engine 112 and Engine 114 are separated primarily for purposes of illustration. In actual effect, Engine 112 and Engine 114 operate tightly together and might be considered a single engine as they both may process rules and they both may break down the file for analysis.

Engine 114 parses rules as given to it by the rules database, however some rules may be apart from the rules database and ingrained within the Engine itself. However, any such rule is able to be enabled or disabled from the rules database.

Engine 114 performs the heuristic analysis of a static and dynamic nature on the file. "Static" herein is defined as a analysis which is cold and does not involve running any instructions either in actuality nor in any type of virtual processing. In a "static" heuristic engine, rules are applied to the file through a system of remote analysis similar to a code byte signature system, except that such analysis may involve, for instance, the parsing of actual instructions within the system, such as parsing of the various formats within the file, such as breaking down the versioning information or parsing the PE (pre-execution) loader section, or parsing functions within the file.

In Engine 114, "Dynamic analysis" involves parsing the file in such a manner in which the instructions of the file may be run directly or "virtually". This type of analysis is useful for cutting through iterations of code which have a end result that is the same, but the actual code itself is obscured through a variety of means of redirection so that the code in question might be obscured, and therefore escape analysis through static means.

Engine 114 attempts to examine the file in such a way as to detect whether or not it is a forgery by applying rules which indicate first whether or not the file is attempting to pose as a system file. If the file is attempting to pose as a system file it is then examined for whether or not it actually is a system file.

Engine 114 is dynamic, therefore it depends on an outside rules database. As system files change and as malware changes, this system needs to be updated: just as anti-forgery systems for monetary processing must be updated as counterfeiters try new tricks and find holes in old systems, and as the money itself is changed.

For example, Engine 114 takes in a rule which directs the system to examine the version information within the unknown file under examination. Such version information might claim that the file is a system file, being made by the OS vendor. Then a check might be made which looks into the file and sees if it is packed with a compression program called UPX (Ultimate Packer for eXecutables). As this vendor would likely never use UPX, if the suspect file is then packed with UPX, and it claims to be from the OS Vendor, then that file may be condemned as a "malware file". In the case of "UPX" packed binaries, this is a type of packing of binary files which modifies their internal construction. It is a free and opensource packing method which certain vendors are unlikely to use. There are many such applications like UPX which hackers may use to disguise their malicious files including applications such as MORPHINE, ASPACK, or MEW.

In this example, other checks may be made on the file, if the file claims to be from the OS vendor. For purposes of illustration, the "UPX" check may be extended. Such an extended check may involve analysis of the PE File format specifications written by the processor vendor for binary file types which are executable in nature. The system therefore understands this file format specification and makes sense of it, in order to perform the analysis which is impossible through a mere static string checking functioning in an accurate manner.

If, through this analysis, the suspect file is found to be claiming or purporting to be a system file through the versioning information within the file, then the file is checked with a variety of other rules to see if it has other traits which would never be found within such an OS vendor's or other type of system file. Another example check would be to see if the file was compiled with a competing vendor's compiler, or a compiler other than one traditionally used by the vendor. As this OS vendor would likely never use this competing vendor's compiler, we can then accurately ban the file as a malware file. If, however, this OS vendor at a later date changes their own methodology of compiling files or compressing files, then these rules may be removed from the rules database, disabled, or modified to reflect the new changes.

Other analysis points might include but is not limited to looking within the file for certain functionality which is known to be unlike the file in question. For instance, if this unknown file is claiming to be a certain system file, we can then perform certain dynamic checks against the file such as whether or not it should have the functionality within it to hook into foreign processes or download executable content from the web. Such checks might be performed through either static or dynamic analysis methods.

Additionally, files may be analyzed in many different ways to determine whether or not they are forgeries. In one current implementation, binaries may be profiled based on a statistical entropic analysis system and then compared against a Bayesian (or conditional probability) driven database of "good" files and "bad" files to ascertain whether or not the file in question is likely to be a forgery. Thus, this result 116 may be passed to an outside system 124 that parses the results of flow 100 and provide statistical and/or informational output to a user or for storage in a log file. In reference to the anti-forgery rule processing engine 114, anti-forgery rules may be contained in an anti-forgery rule database 118 with rules that may be added to or changed by a user adding a rule 120 and/or the anti-forgery system adding a rule 122 comprising a dynamically updated anti-forgery rule database 128. In this manner, the heuristic flow is adaptable to new malicious file identifiers based on new or changed anti-forgery rules.

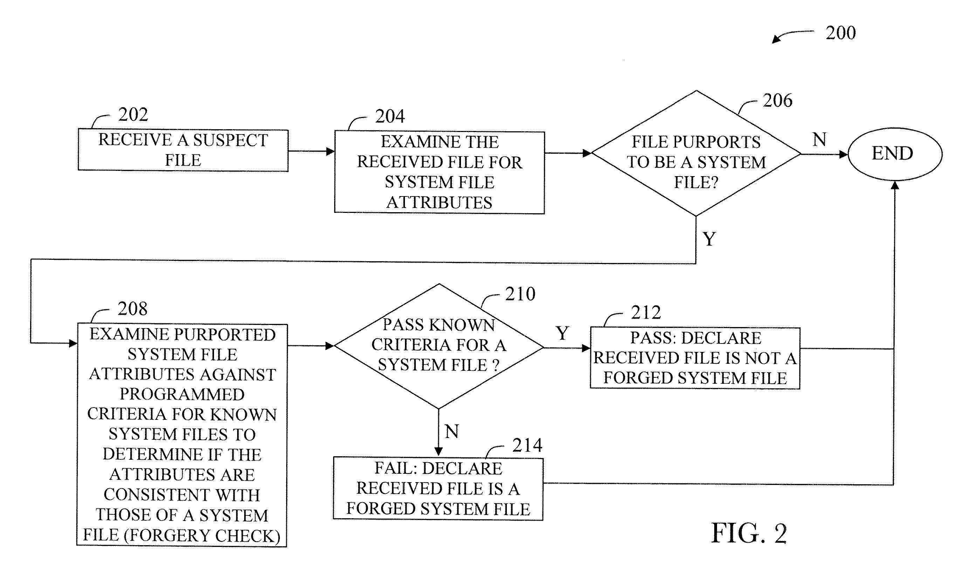

FIG. 2 shows another forgery detection flow 200, in accordance with an embodiment of the present invention. Flow 200 may comprise one or more of the following operations, including receiving a suspect file in operation 202, and examining the received file in operation 204 to determine if the suspect file purports to be a system file. A suspect file may purport to be a system file when the received file includes one or more certain attributes or properties associated with a system file. Such properties can include a file name or a file name extension traditionally used by a system file. For example, in a MICROSOFT WINDOWS (R) or Disc Operating System (DOS) computer system, a *.sys file is typically considered a system file. Other system files may be defined and classified as disclosed herein.

Once the received file has been examined in operation 204, flow 200 continues with a determination whether the received file purports to be a system file in operation 206. If the received file does not purport to be a system file, the result of the determination in operation 206 is 'N' and flow 200 is terminated. However, if the attributes and/or properties of the received file indicate the received file is a system file, the result of the determination is 'Y' and flow 200 continues with examining the purported system file against programmed criteria for known system files in operation 208. Flow 200 continues with a determination whether the examination of the purported system file in operation 208 passes the known system file criteria in operation 210. If the received file passes the known criteria for a known system file, the result of the determination in operation 210 is 'Y' and flow 200 continues to declare the received file is not a forged system file in operation 212 and flow 200 is terminated. However, if the received file does not pass the known system file criteria, the result of the determination in operation 210 is 'N' then flow 200 continues with declaring the received file is a forged system file in operation 214 and flow 200 is terminated.

The assumptions implicit within operation 206 is that the attributes are detected and correlated to ascertain whether, taken in part or as a whole, whether they indicate the received file purports to be a system file. However, in operation 210 the assumptions are less generous since each required criteria known for the determined system file type must pass, otherwise the received file is deemed a forgery.

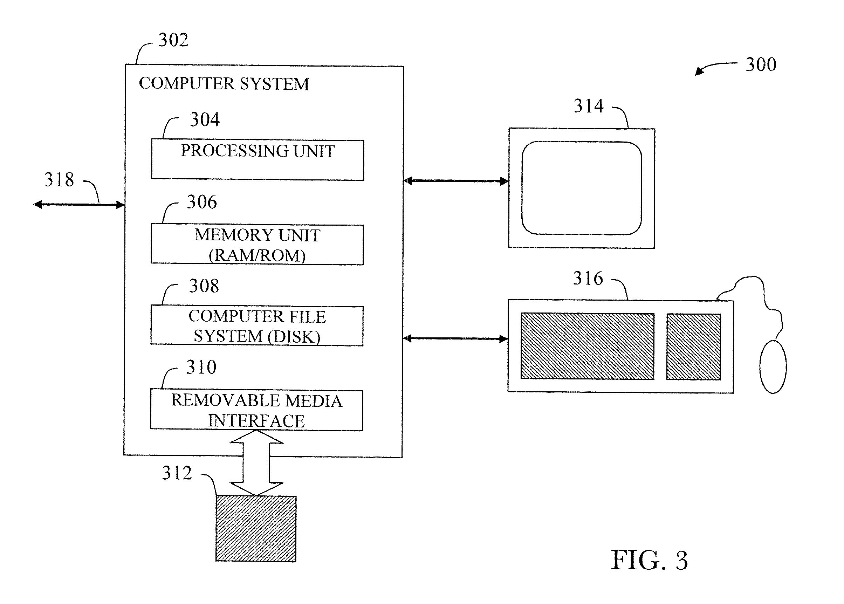

FIG. 3 shows an exemplary computer system 300 configured for implementing anti-forgery heuristic flows, including flows 100 and 200. Computer system 300 may include a processing unit 304 for executing computer instructions to move data and perform computations, a memory unit 306 for storing computer instructions and intermediate data, and a computer file system 308 for storing and retrieving computer files. Memory unit can include a Random Access Memory (RAM) and a Read Only Memory (ROM) as example media for storing and retrieving computer data including computer programs for use in processing by processing unit 304. Similarly, computer file system 308 can include an optical or magnetic disc as exemplary media for reading and writing (storing and retrieving) computer data and program instructions. Computer system 302 may include a removable media interface 310 for communicating with removable media element 312 such as a removable computer disc (optical or magnetic) or a removable solid-state memory are examples of removable computer readable media. A typical computer system 302 interfaces with a monitor 314, a keyboard/mouse 316, and a network interface and/or connection for sending and receiving information over a communications network 318. Computer system 302 may receive a malicious computer file from network 318 or removable media 312, and any of the above media may be used to store and retrieve data that may contain malicious computer files. Network 318 may connect to a Local Area Network (LAN), a Wide Area Network (WAN), and/or the Internet so that a suspect file may be accessed in another computer system having a memory unit, computer file system, and/or removable memory element. In this manner, a local computer system 300 may perform rigorous forgery detection on files located on a remote system.

Anti-Virus heuristic systems involve a more intelligent process then the aforementioned signature-only process. Such systems are designed to apply a more rigorous but dynamic inspection of file to determine whether or not the file is a piece of malware. "Heuristic" means "investigative" and implies any manner of investigative analysis of a file through automated means outside of blind, one step signature comparison analysis.

Heuristic systems offer a great deal of promise to the Anti-Virus field, because they attempt to inject a greater degree of freedom within the inspection of malicious files in order to determine their malicious intent. This promise holds that malicious files which are unknown might be classified automatically by such a system through behavioral and other analysis in order to be properly tagged as malicious.

In practice, heuristic systems work very well, where the file's behavioral capabilities or other malicious capabilities are not obscured through means of redirection or other forms of deceptive practices designed to hide the real capabilities and intentions of the file. In practice, heuristic systems tend to misclassify too many non-malicious files as malicious, thereby introducing unwanted stress upon the entire organization that manages the network. This problem is generally due to the wide spread practice of malicious files having their true maliciousness being effectively obscured, and the incapability of heuristic systems to deal with them. Heuristic systems may be broadly categorized as using "dynamic" and/or "static" analysis. Dynamic analysis means that the file is analyzed through a virtualized system, either by hooking directly into the file or by virtually emulating the system itself in a safe environment which contains any potentially malicious behavior. Static analysis refers to analysis of the file without actually executing the file in any manner.

Another system of note is a system integrity (SI) system which are designed to prevent malicious files from posing as system files. Such systems typically make a "white list" or safe list of known safe files on a system and then compare, on a regular basis, the current contents of the system with the white list. SI systems must consider authorized changes to the system files, which is a tedious process because the system files may be continually updated. Many false positives result from the tedious calculation of authorized system file changes to denote unauthorized system file changes. Because of the typically high changeable nature of the state of system files this tedious process may reduce the effectiveness of such a system and it does not ultimately guarantee non-malicious file content either. An additional problem with cryptographic hashing systems is that they leave some level of trust with the signer, where the signer or a resulting signature may be forged if the system is improperly implemented due to dependence on Certificate Authorities (CA), the signer may be compromised, the CA may have been hacked, or the signatures themselves may have been stolen. Even Vendor systems may be hacked. The systems and methods herein described are not designed to completely replace system integrity, cryptographic hashing, Certificate Authorities, or heuristics, but rather to supplement such systems and methods to make them more robust and/or viable.

Another major problem with system integrity systems is that they do not have a mechanism for dealing with files that are claiming to be system files but for which there exists on the system no duplicate or archive. This method is very popular among malware researchers because many core system files are usually protected by default by the OS through an anti-replacement locking system which archives copies of the files, compares checksums for the file, and checks to see that the checksum remains correct. If it is not, the file is replaced. This system generally kicks in when a file modification API is used.

A further reason that malicious users wish to have their malicious files pose as system files is in any way to lend other legitimacy to their malicious file. Such files might pose as a service or executable or other file that does not exist. The file might have a title or other identifying information somewhere in the file that claims to be from a known, good vendor. The inner description in the version information might substantiate this claim. Conversely, the identifying information might simply be the filename or the appearance of the program. Obviously, malicious designers or redesigners of malware do not want to call attention to their file by having it proclaim or advertise its malicious intention, so very often a malware designer may take a further step and attempt to forge system files in a wide variety of ways in order to evade manual and/or automated detection.

Embodiments of the present invention disclose an entirely different way of approaching these and other problems by performing investigative analysis on the suspect file against known attributes of the type of file being replaced. The disclosed system is programmable, and so it is constantly expandable, and it is abstract enough so as to not have to deal with the continual flux of system files. As an example, the disclosed system can check whether or not a file is claiming to be from "Microsoft" within the version field of an executable. Then a further check may be used to ensure that the file is not packed with an opensource product called "UPX". This may be done by examining the section name fields of the executable. Because Microsoft is unlikely to ever pack their officially distributed files with UPX, such files may be absolutely confirmed as being malicious (as opposed to being merely "possibly malicious", or not absolutely confirmed). A similiar check searches for the presence of a Borland "form" or UI (user interface) component in such a file. As Microsoft files are built without these forms and it is also highly unlikely that they ever will be built with these forms, we are able then to condemn the file as malicious with a very little chance for error. These two checks alone catch a wide variety of malware, as malicious designers and redesigners often use Borland products and use UPX to pack their files in order to obscure their internal workings without bringing on noticeable decline in performance.

The investigative system examines every piece or component of the file, being programmed to being able to properly dissect the file, and looks for any manner of sign that the said file might be a legitimate system file. Such techniques for verification may include but are not limited to: examining the version field information within a binary executable; examining URL information within HTML or Information products; examining the icon of the file to see if it is a system file icon such as the "notepad.exe", "paint.exe", "Internet Explorer", or "Explorer" icons; examining title information within UIs; examining the registry creation description field within the file; examining file creation or alteration routines within the file that might create a description of the file within a service description field or other description holder place; examining the title of the file for known vendor filenames; and examining the title or changed possible title of the file which might be later changed for a good variation and possible forgery for a known, good vendor, and so forth. This system may operate on dormant, unexecuted files, or may operate on files being executed and caught by a handler to examine before finalizing the execution process.

This system may execute on files being delivered to the system in anyway, for instance through a floppy disk injection, through an analysis of an email, through network traffic, or through more common Anti-Virus means such as through hooking the creation of the file, or hooking the execution of the file, or by examining the file which is found to be in existence on disk.

The investigative system might use unlikely code fragments of any manner to indicate that this file is a forgery, including, but not limited to, the presence of unlikely code components such as the aforementioned UPX or Borland forms, the presence of unlikely behaviors, the presence of unlikely properties, the presence of malicious and unlikely activity, and so forth.

Although the invention has been described with respect to particular embodiments, this description is only an example of the invention's application and should not be taken as a limitation. It should also be understood that numerous modifications and variations are possible in accordance with the principles of the present invention. Accordingly, the scope of the invention is defined only by the following claims.

## Claims

1. A method of determining whether a suspect file is malicious, comprising the operations of:
parsing the suspect file to determine if the suspect file purports to be a system file, the suspect file being a purported system file when the suspect file includes at least one characteristic attribute of a system file;
performing at least one of a heuristic and signature analysis on the purported system file to determine if one or more attributes of the purported system file are consistent with the known attributes of a system file; and
handling the purported system as a malicious file if the purported system file has at least one attribute that is determined not to be consistent with the attributes of a system file.

2. The method of claim 1, wherein the process of heuristic analysis includes performing investigative analysis on the suspect against known attributes of the file type.

3. The method of claim 1 or 2, wherein the process of heuristic and/or signature analysis is programmable.

4. The method of claim 1, 2 or 3, wherein the computer file is one of a replacement file, duplicate file, or extraneous file falsely purporting to be a system file.

5. The method of claim 1, 2, 3 or 4, wherein the process of heuristic analysis involves at least one of static analysis and dynamic analysis.

6. The method of claim 5, wherein static analysis includes analyzing the suspect file without executing the file.

7. The method of claim 5, wherein dynamic analysis includes utilizing the suspect file in a virtualized system.

8. The method of claim 7, wherein the virtualized system includes one of hooking directly into the file and virtually emulating the computer system.

9. The method of any one of claims 1 to 8, wherein handling the purported system as a malicious file comprises at least one of:
quarantining the malicious file; and
deleting the malicious file.

10. A computer readable medium on which is stored a computer program for executing the following instructions:
parsing a suspect file to determine if the suspect file purports to be a system file, the suspect file being a purported system file when the suspect file includes at least one characteristic attribute of a system file;
performing at least one of a heuristic and signature analysis on the purported system file to determine if one or more attributes of the purported system file are consistent with the known attributes of a system file; and
handling the purported system as a malicious file if the purported system file has at least one attribute that is determined not to be consistent with the attributes of a system file.

11. A malware resistant computer system, comprising:
a processing unit;
a removable media interface configured to provide access to a received removable media element;
a memory unit; and
a computer file system,
wherein the processing unit executes a series of operations to detect malware in at least one of the memory unit and the computer file system, the operations comprising:
parsing a suspect file to determine if the suspect file purports to be a system file, the suspect file being a purported system file when the suspect file includes at least one characteristic attribute of a system file;
performing at least one of a heuristic and signature analysis on the purported system file to determine if one or more attributes of the purported system file are consistent with the known attributes of a system file; and
handling the purported system as a malicious file if the purported system file has at least one attribute that is determined not to be consistent with the attributes of a system file.

12. A method, comprising:
receiving a suspect file;
examining the suspect file to determine if the file purports to be a system file;
examining the attributes of the purported system file to determine if the attributes are consistent with a system file; and
declaring the purported file to be a forgery when the attributes are not consistent with the attributes of a system file.

13. The method of claim 12, further comprising:
declaring the purported file to be a legitimate system file when the attributes are consistent with the attributes of a system file.

14. The method of claim 12 or 13, wherein the operation of examining the suspect file to determine if the file purports to be a system file further comprises:
examining the suspect file name root; and
comparing the suspect file name root to a database of system file name roots.

15. The method of claim 12 or 13, wherein the operation of examining the suspect file to determine if the file purports to be a system file further comprises:
examining the suspect file name extension; and
comparing the suspect file name extension to a database of system file name extensions.

16. The method of claim 12 or 13, wherein the operation of examining the attributes of the purported system file to determine if the attributes are consistent with a system file further comprises:
examining the suspect file content to determine the presence of executable code; and
examining the function of that executable code; and
comparing the function of the executable code with the expected function based on at least one of a determined system file type, a determined system file originator, and a determined system file scope.

17. The method of claim 12 or 13, wherein the operation of examining the suspect file to determine if the file purports to be a system file further comprises:
examining the suspect file content to determine the presence of at least one of an operating system vendor identifier, an operating system version identifier, a system file name identical to a known good system file name, a system file icon identical to a known good system file icon, a functionality within the suspect file that is not exposed until runtime including the capability of one of decompressing and creating a secondary file with system file attributes, a functionality to create a system driver file that uses system file attributes within the definition of that driver, and any functionality reserved solely for a system file.

18. The method of claim 12 or 13, wherein the operation of examining the attributes of the purported system file to determine if the attributes are consistent with a system file further comprises:
examining the attributes of the purported system file to determine at least one of a predetermined version characteristic, a time period characteristic, a predetermined syntax within known good version information, a predetermined behavioral characteristic conforming to known good behavioral parameters, one of corresponding file deletion and creation capabilities, one of packing and encrypting methods corresponding to predetermined vendor methods, file icons corresponding to purported vendor icons, congruent vendor compiler characteristics, one of the presence of and absence of corresponding language character sets, and the presence of extraneous characters that are not congruent with a predetermined vendor product, and file permissions congruent with predetermined vendor file permissions.

19. The method of claim 12 or 13, wherein the suspect file resides on one of a removable media element, a memory unit having at least one of a random access memory and a read only memory, and a computer file system.

20. The method of claim 19, wherein the suspect file is accessed over a communications network.
